# EUROPÄISCHE PATENTSCHRIFT

(11) **EP 1 769 357 B1**
(45) Veröffentlichungstag und Bekanntmachung des Hinweises auf die Patenterteilung: **10.09.2014**
(21) Anmeldenummer: 05756682.0
(22) Anmeldetag: 04.07.2005
(51) Int. Cl.: G06F 11/26

(54) **VERFAHREN ZUR KOPPLUNG EINES STEUERGERÄTS MIT EINEM PROGRAMM ZUR MODELLIERUNG EINER WIRKKETTENDIAGNOSE**
METHOD FOR COUPLING A CONTROL DEVICE TO A PROGRAM USED FOR CHAIN EFFECT DIAGNOSIS MODELING
PROCÉDÉ DE COUPLAGE D'UN APPAREIL DE COMMANDE AVEC UN PROGRAMME DE MODÉLISATION DE DIAGNOSTIC DE CHAÎNE D'ACTION

(30) Priorität: 14.07.2004 DE 102004033957; 26.08.2004 DE 102004041216
(43) Veröffentlichungstag der Anmeldung: 04.04.2007
(73) Patentinhaber: ROBERT BOSCH GMBH, 70442 Stuttgart (DE)
(72) Erfinder: DINGLER, Thomas, 70435 Stuttgart (DE)
(86) Internationale Anmeldenummer: PCT/EP2005/053161
(87) Internationale Veröffentlichungsnummer: WO 2006/005693

(56) Entgegenhaltungen:
- EP-A- 0 442 277
- US-A- 5 515 384

## Beschreibung

Die vorliegende Erfindung betrifft ein Verfahren zur Kopplung eines Steuergeräts mit einem Programm zur Modellierung einer Wirkkettendiagnose, d.h. zum Erzeugen von Diagnosewissen für eine Systemdiagnose durch Simulation des Nominal- und des Fehlerverhaltens. Die hierbei gewonnenen Antwortroutinen können dann in einem Steuergerät abgelegt werden und zur schnellen Fehlersuche, d.h. Eingrenzung des Problems auf wenige verdächtige Komponenten, verwendet werden.

Durch die zunehmende Verwendung von Elektronik, bspw. bei der Steuerung von Motoren insbesondere bei Kraftfahrzeugen, werden Fehlerdiagnosen immer aufwendiger. Hier ist es sinnvoll, mögliche Fehler im System mittels einer auf einem externen Rechner ablaufenden Wirkkettendiagnose zu untersuchen. Um eine solche Wirkkette modellieren zu können ist es bspw. bekannt, eine Simulation beider Systeme (zu untersuchendes System und Programm zur Erstellung der Wirkkette) auf einem Rechner durchzuführen, wobei hier eine Anpassung der Berechnungsgeschwindigkeiten notwendig ist. Dies verursacht einen sehr hohen Aufwand, da sowohl die Steuergerät-Software und ein Modell des Systems auf dem Rechner umgesetzt werden müssen. Hierdurch wird aber auch das Systemverhalten beeinflußt, so dass die Erkenntnisse nur bedingt auf das Original übertragen werden können.

Zur Lösung der hiermit einhergehenden Probleme ist es bekannt, unter Verwendung eines Originalsteuergerätes den Ablauf des schnelleren Systems bspw. über die CPU-Clock zu verlangsamen. Andererseits ist es begrenzt möglich, den Ablauf des langsameren Systems zu beschleunigen, bspw. durch Bereitstellung leistungsfähigerer Rechner. Es bleibt aber immer das Problem, dass das Originalverhalten nicht zu 100% erreicht wird und erheblicher Anpassungsaufwand entsteht.

Aus der US 5,515,384 A ist ein Verfahren zur Simulation einer Wirkkette in Folge eines Fehlers bekannt, welches in einem Speicher abgelegt und in einem Produkttest zur Diagnose von Fehlern verwendet wird.

Aufgabe der vorliegenden Erfindung ist die Kopplung eines Steuergeräts, z.B. eines Steuergeräts welches in einem Kraftfahrzeug zum Betrieb des Motors verwendet wird, mit einem Programm zur Berechnung einer Wirkkettendiagnose (hierunter wird eine Auswertung von Sensorwerten und Stellgrößen in unterschiedlichen Betriebszuständen zur Fehlererkennung verstanden). Die Berechnungsgeschwindigkeiten bei der Modellierung der Wirkketten sind wesentlich langsamer als diejenigen des Steuergeräts. Da jedoch Eingriffe in das Steuergerät, beispielsweise zur Änderung eines Betriebspunktes, durch die Wirkkettendiagnose in Abhängigkeit von Sensorwerten und Stellgrößen notwendig sind, müssen die Abläufe des Steuergeräts und der Wirkkettendiagnose synchronisiert werden.

Die vorliegende Erfindung strebt an, zu diesem Zwecke ein (Applikations)- Steuergerät ohne Veränderung herkömmlicher Hardware und Softwarekomponenten verwenden zu können.

Dieses Ziel wird erreicht durch ein Verfahren mit den Merkmalen des Patentanspruchs 1, ein Computerprogramm mit den Merkmalen des Patentanspruchs 3 und ein Computerprogrammprodukt mit den Merkmalen des Patentanspruchs 4.

Die im Rahmen des erfindungsgemäßen Verfahrens durchzuführende Simulation kann in vorteilhafter Weise mit vorhandener Seriensoftware durchgeführt werden, es sind gegebenenfalls lediglich Eingriffsstellen für die Eingänge des Steuergeräts frei zu schneiden, falls diese nicht sowieso schon vorhanden sind. Erfindungsgemäß können Synchronisationsprobleme, wie sie beispielsweise beim Anhalten einer Software bzw. eines Rechners auftraten, wirksam vermieden werden. Das erfindungsgemäße Verfahren erweist sich als besonders wirtschaftlich, da ein Softwarecode des Steuergeräts nicht auf einen externen Rechner übertragen werden muss.

Das erfindungsgemäß berechnete bzw. simulierte Systemverhalten entspricht dem Orginalverhalten des Steuergeräts. Eine Hardware muss nicht an einen langsameren Ablauf der Wirkkettendiagnosenberechnung angepasst werden. Eine Umsetzung des erfindungsgemäßen Verfahrens auf beliebige Steuergerätevarianten/Systeme ist problemlos möglich.

Vorteilhafte Ausführungsformen des erfindungsgemäßen Verfahrens sind Gegenstand der Unteransprüche.

Zweckmäßigerweise erfolgt der erfindungsgemäße Durchlauf des Verfahrens für eine Wirkkettendiagnose mit n Eingriffen entsprechend n +1 Mal. Mit dieser Vorgehensweise ist eine besonders wirtschaftliche, und ausreichend exakte Modellierung der Wirkketten realisierbar.

Die vorliegende Erfindung wird nun anhand der beigefügten Zeichnung weiter beschrieben. In dieser zeigt

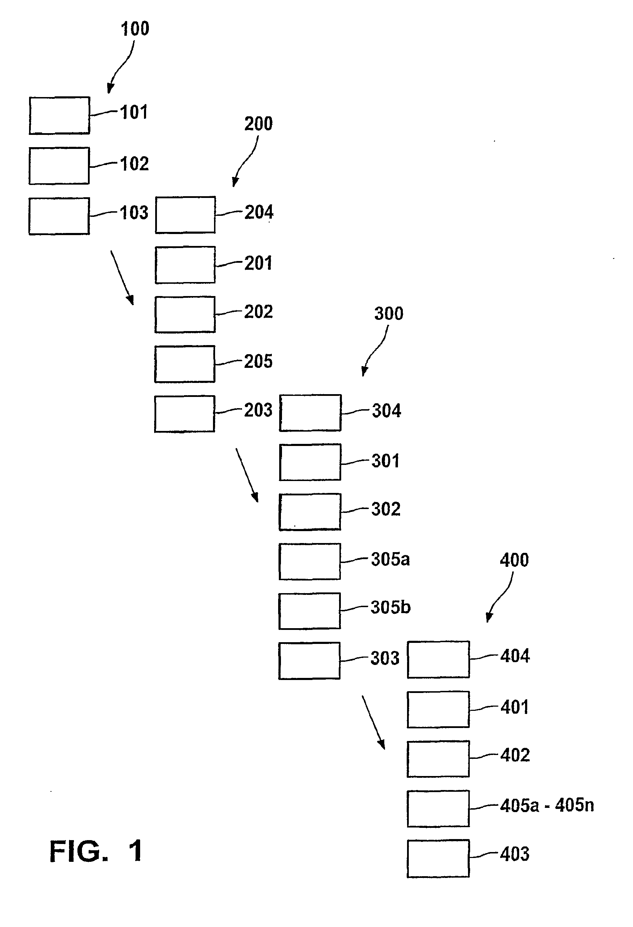

Figur 1 ein Flussdiagramm zur Darstellung einer bevorzugten Ausführungsform des erfindungsgemäßen Verfahrens.

Gemäß der in Figur 1 dargestellten bevorzugten Ausführungsform des erfindungsgemäßen Verfahrens gliedert sich dieses in vier Durchläufe 100, 200, 300, 400. Es sei angemerkt, dass eine beliebige Anzahl n von Durchläufen denkbar ist, wobei sich weitere Durchläufe in analoger Weise an die vier dargestellten Durchläufe anschließen.

In einem ersten Schritt 101 des ersten Durchlaufs wird von einem Steuergerät ein Betriebspunkt angefahren. Dies ist insbesondere dadurch realisierbar, dass Anfangssteuersignale (z.B. Gaspedalstellung, Umgebungstemperatur, Motortemperatur usw.) für die Bereitstellung eines Sollbetriebszustands abgegeben werden. Ein solcher Zustand kann durch die Angabe von mehreren Betriebsparametern vorgegeben sein.

In einem Schritt 102 wird anschließend ein Fehler angelegt. Ein solcher Fehler kann beispielsweise das Vorhandensein eines Kurzschlusses in einer Leitung oder ein fehlerhafter Sensor sein. Ferner ist es möglich, dass ein Stellglied nicht oder nicht korrekt reagiert. Das Anlegen eines Fehlers bedeutet insbesondere, dass eine Abweichung betreffend eine Größe bzw. Wirkungsweise einer von dem Steuergerät gesteuerten System gegenüber einem Modell erzeugt wird.

In einem Schritt 103 werden dann Sensorwerte und Stellgrößen aufgezeichnet, und in einem Analyseprogramm zur Wirkkettendiagnose wird hieraus ein Eingriff in das Steuergerät berechnet.

Da jedoch das Modellierungsprogramm für die Wirkkettendiagnose bezüglich der Funktion des Steuergeräts zu langsam rechnet, wird der geeignete Eingriffszeitpunkt in das Steuergerät überschritten. Daher wird das Steuergerät in einem anschließenden Schritt 204 (Beginn des zweiten Durchlaufs 200) zurückgesetzt d.h. neu initialisiert. Ferner wird der Fehlerspeicher des Steuergeräts gelöscht und der Anfangszustand (d.h. der ursprünglich in Schritt 101 ausgewählte Betriebspunkt) wieder hergestellt bzw. angefahren (Schritt 201). Es sei angemerkt, dass entsprechende Schritte der jeweiligen Durchläufe 100-400 gleiche letzte Ziffern aufweisen.

In Schritt 202 wird nun derselbe Fehler wie in Schritt 102 angelegt, und in einem anschließenden Schritt 205 der in Schritt 103 von der Wirkkettendiagnose berechnete Eingriff ausgeführt. Mit den somit erhaltenen Daten kann die Wirkkettendiagnose anschließend in einem nachfolgenden Schritt 203 einen zweiten Eingriff berechnen.

Das dargestellte Verfahren wird nun in einem dritten Durchlauf 300 usw. ausgeführt, wobei, wie erwähnt, gleichartige Verfahrensschritte mit gleichen Endziffern bezeichnet sind. Man erkennt, dass im dritten Durchlauf zwei Schritte (305a, 305b) zur Ausführung der berechneten Eingriffe ausgeführt werden.

Es werden so viele Durchläufe durchgeführt, wie für die jeweilige Wirkkettendiagnose notwendig ist. Entsprechend ergeben sich in n-ten Durchlauf n Schritte (symbolisch mit 405a-405n) bezeichnet zur Ausführung der berechneten Eingriffe. Ein Neustart des Steuergerätes ist immer nur dann notwendig, wenn die Wirkkettendiagnose auf das Geschehen reagieren bzw. in dieses eingreifen möchte. Da der Neustart des Steuergerätes während der Berechnung der Wirkkettendiagnose erfolgen kann, ist das dargestellte Verfahren für fast alle Fehlerfälle ohne zeitlichen Mehraufwand anwendbar.

Die dargestellte Schrittfolge kann aus nur wenigen Gruppen von Steuersignalen für nur wenige Durchläufe bestehen, es kann jedoch auch eine deutlich höhere Anzahl von Durchläufen vorgesehen sein, etwa in der Größenordnung von bis zu zehn, zwanzig, fünzig oder hundert. Bei leistungsfähigen Rechnern kann eine Berechnung auch eine für eine Anzahl von Durchläufen in der Größenordnung von tausenden bis zehntausenden durchgeführt werden. Das erfindungsgemäße Verfahren unterscheidet sich von herkömmlichen Regelungen insbesondere dadurch, dass eine große Anzahl von Durchläufen ausgeführt werden kann, bei denen jeweils der Anfangszustand wiederhergestellt wird, während ein nächster Eingriff der Wirkkettendiagnose berechnet wird.

Mit dem erfindungsgemäßen Verfahren werden, mit anderen Worten, folgende Schritte wiederholt durchgeführt: zunächst gibt ein Steuergerät Anfangssteuersignale für die Herstellung eines durch mehrere Betriebsparameter gekennzeichneten Sollbetriebszustands ab. Anschließend wird die vorgegebene Abweichung in einem System oder das System darstellenden Modell eingeführt, und auf der Grundlage dieses Modells wird ein von dem Sollbetriebszustand verschiedener Istbetriebszustand dargestellt. Anschließend werden nacheinander die jeweiligen Steuersignale auf der bisher erzeugten Folge abgegeben, um das System in aufeinanderfolgende Istbetriebszustände zu überführen bzw. aufeinanderfolgende Istbetriebszustände darzustellen.

Während und am Ende der Folge aus Steuersignalen wird der Istbetriebszustand anhand von Sensor- und oder abgegebenen Stellgrößensignalen erfasst, und es werden, insbesondere zueinander zeitgleich, die Sensorsignale sowie Stellgrößensignale einer Recheneinheit zugeführt und in der Recheneinheit aus diesen Signalen Steuersignale ermittelt, die zu der Steuersignalfolge (Durchlauf) an deren Ende mit dem nächsten Durchlauf hinzugefügt werden. Es erfolgt stets eine Rückstellung des Steuergerätes in den oben genannten Sollbetriebszustand, so dass das Steuergerät nach jedem Durchlauf wiederum Anfangssteuersignale für die Herstellung des durch mehrere Betriebsparameter gekennzeichneten Sollbetriebszustands abgeben kann.

Es sei angemerkt, dass die Steuersignale zu jedem Zeitpunkt einem Modell des Systems oder einem tatsächlichen System (z.B. Motor) zugeführt werden können.

## Patentansprüche

1. Verfahren zur Kopplung eines Steuergeräts, insbesondere Motorsteuergeräts, zur Steuerung eines Systems, insbesondere Motors, mit einem Programm zur Modellierung einer Wirkkettendiagnose oder sonstigen Programmen zur Fehleranalyse, mit folgenden Schritten:
- Im Rahmen eines ersten Durchlaufs (100) Anfahren eines Betriebspunktes des Systems, Erzeugen eines Fehlers und Berechnung eines Eingriffs mittels eines Programms zur Modellierung der Wirkkettendiagnose oder der sonstigen Programme zur Fehleranalyse,
- im Rahmen eines zweiten Durchlaufs (200) Rücksetzen des Steuergeräts und Löschen des Fehlerspeichers im Steuergerät, erneutes Anfahren des Betriebspunktes, erneutes Anlegen des Fehlers aus dem ersten Durchlauf, Ausführung des ersten mittels Wirkkettendiagnose im ersten Durchlauf (100) berechneten Eingriffs, und Berechnung eines zweiten Eingriffs mittels des Programms zur Modellierung der Wirkkettendiagnose, und
- im Rahmen wenigstens eines weiteren Durchlaufs Zurücksetzen des Steuergeräts und Löschen des Fehlerspeichers, erneutes Anfahren des Betriebspunktes, erneutes Anlegen des Fehlers, Ausführung der mittels der Wirkkettendiagnose in vorhergehenden Durchläufen berechneten Eingriffe, und gegebenenfalls Berechnung wenigstens eines weiteren Eingriffs mittels der Wirkkettendiagnose.

2. Verfahren nach Anspruch 1, **dadurch gekennzeichnet, dass** bei einer Modellierung der Wirkkette mit n Gliedern n +1 Durchläufe durchgeführt werden.

3. Computerprogramm mit Programmcode-Mitteln, um ein Verfahren nach wenigstens einen der Ansprüche 1 oder 2 durchzuführen, wenn das Computerprogramm auf einem Computer oder einer entsprechenden Rechnereinheit ausgeführt wird.

4. Computerprogrammprodukt mit Programmcode-Mitteln, die auf einem Computerlesbaren Datenträger gespeichert sind, um ein Verfahren nach wenigstens einem der Ansprüche 1 oder 2 durchzuführen, wenn das Computerprogrammprodukt auf einem Computer oder einer entsprechenden Rechnereinheit ausgeführt wird.

## Claims

1. Method for coupling a control device, in particular an engine control device, for controlling a system, in particular an engine, to a program for modelling an active chain diagnosis or other fault analysis programs, having the following steps:
- during a first pass (100), an operating point of the system is approached, a fault is generated, and an intervention is calculated using a program for modelling the active chain diagnosis or the other fault analysis programs,
- during a second pass (200), the control device is reset and the fault memory in the control device is erased, the operating point is approached again, the fault from the first pass is created again, the first intervention calculated in the first pass (100) using the active chain diagnosis is carried out, and a second intervention is calculated using the program for modelling the active chain diagnosis, and
- during at least one further pass, the control device is reset and the fault memory is erased, the operating point is approached again, the fault is created again, the interventions calculated in preceding passes using the active chain diagnosis are carried out, and if necessary at least one further intervention is calculated using the active chain diagnosis.

2. Method according to Claim 1, **characterized in that** n+1 passes are carried out when modelling the active chain with n elements.

3. Computer program having program code means for carrying out a method according to at least one of Claims 1 and 2 when the computer program is executed on a computer or a corresponding computer unit.

4. Computer program product having program code means which are stored on a computer-readable data storage medium in order to carry out a method according to at least one of Claims 1 and 2 when the computer program product is executed on a computer or a corresponding computer unit.

## Revendications

1. Procédé pour connecter un contrôleur, notamment un contrôleur de moteur, pour la commande d'un système, notamment d'un moteur, avec un programme de modélisation d'un diagnostic de chaîne causale ou d'autres programmes d'analyse des défauts, comprenant les étapes suivantes :
- dans le cadre d'un premier balayage (100), atteinte d'un point de fonctionnement du système, génération d'un défaut et calcul d'une intervention au moyen d'un programme de modélisation du diagnostic de chaîne causale ou des autres programmes d'analyse des défauts,
- dans le cadre d'un deuxième balayage (200), réinitialisation du contrôleur et effacement de la mémoire des défauts dans le contrôleur, nouvelle atteinte du point de fonctionnement, nouvelle application du défaut résultant du premier balayage, exécution de la première intervention calculée au moyen du diagnostic de chaîne causale dans le premier balayage (100), et calcul d'une deuxième intervention au moyen du programme de modélisation du diagnostic de chaîne causale, et
- dans le cadre d'au moins un balayage supplémentaire, réinitialisation du contrôleur et effacement de la mémoire des défauts, nouvelle atteinte du point de fonctionnement, nouvelle application du défaut, exécution des interventions calculées au moyen du diagnostic de chaîne causale dans les balayages précédents, et
le cas échéant, calcul d'au moins une intervention supplémentaire au moyen du diagnostic de chaîne causale.

2. Procédé selon la revendication 1, **caractérisé en ce que** lors d'une modélisation de la chaîne causale avec n membres, n+1 balayages sont exécutés.

3. Programme informatique comprenant des moyens de code de programme pour mettre en oeuvre un procédé selon au moins l'une des revendications 1 ou 2 lorsque le programme informatique est exécuté sur un ordinateur ou sur une unité de calcul correspondante.

4. Produit de programme informatique comprenant des moyens de code de programme, qui sont enregistrés sur un support de données lisible par ordinateur, pour mettre en oeuvre un procédé selon au moins l'une des revendications 1 ou 2 lorsque le produit de programme informatique est exécuté sur un ordinateur ou sur une unité de calcul correspondante.
